# EUROPÄISCHE PATENTSCHRIFT

(11) **EP 4 306 022 B1**
(45) Veröffentlichungstag und Bekanntmachung des Hinweises auf die Patenterteilung: **13.05.2026**
(21) Anmeldenummer: 23181372.6
(22) Anmeldetag: 26.06.2023
(51) Int. Cl.: A47L 7/00

(54) **BEARBEITUNGSGERÄT ZUR VORBEREITUNG EINER BODENFLÄCHE**
PROCESSING DEVICE FOR PREPARING A GROUND SURFACE
APPAREIL D'USINAGE POUR PRÉPARER UNE SURFACE DE SOL

(30) Priorität: 12.07.2022 DE 102022207089
(43) Veröffentlichungstag der Anmeldung: 17.01.2024
(73) Patentinhaber: BSH Hausgeräte GmbH, 81739 München (DE)
(72) Erfinder: Schaefer, Frank, 82178 Puchheim (DE); Koene, Philip, 81245 München (DE); Orth, Caroline, 82418 Seehausen (DE); Rodriguez Garcia, Aida, 80469 München (DE); Wenger, Christian, 81371 München (DE); Ferraz Maina, Rodrigo, 13125 Berlin (DE); Pequerul, Paola, 50193 Zaragoza (ES)

(56) Entgegenhaltungen:
- CN-A- 108 209 753
- CN-A- 111 265 154
- DE-A1- 102017 112 740
- US-A1- 2019 246 858
- US-A1- 2021 362 320
- US-B1- 9 827 678

## Beschreibung

Die Erfindung betrifft ein Bearbeitungsgerät zur Vorbereitung einer Bodenfläche, insbesondere für eine nachfolgende Bearbeitung mittels einer Bodenbearbeitungsmaschine.

Eine Bodenfläche in einem Haushalt kann mittels einer Bodenbearbeitungsmaschine bearbeitet werden. Beispielsweise kann ein automatischer Staubsaug-Roboter verwendet werden, die Bodenfläche zu saugen, oder ein Wischroboter kann die Bodenfläche mit einer Reinigungsflüssigkeit reinigen. Solche Roboter sind in der Lage, sich auf der Bodenfläche zu orientieren und Hindernisse zu umfahren.

Ein kleinerer Gegenstand auf der Bodenfläche kann dabei nicht erkannt werden, sodass er versehentlich mit bearbeitet werden kann. Der Gegenstand kann als Schmutz oder Abfall verarbeitet werden, sodass er für einen Benutzer verloren ist. Außerdem kann der Gegenstand in eine Bearbeitungsvorrichtung der Bearbeitungsmaschine gelangen und diesen schädigen. Selbst wenn alle Gegenstände erkannt und umfahren werden sollten, kann die Bodenfläche insgesamt nicht überzeugend bearbeitet sein, falls es viele Gegenstände sind.

US 2020 0 205 629 A1 schlägt vor, einen Bodenreiniger dazu anzusteuern, einen Gegenstand auf einer zu bearbeitenden Bodenfläche beiseite zu schieben. KR 20 2008 0 003 542 U betrifft einen Bodenreiniger mit einem Flügelrad, um kleine vor ihm liegende Gegenstände beiseite zu schaffen. Aus der US 9 827 678 B1 ist ein verfahrbarer Roboterarm bekannt, der Gegenstände greifen kann. Die DE 10 2017 112 740 A1 beschreibt einen autonomen Bodenstaubsaugroboter mit Greifarm. US 2021/362320 A1, US 2019/246858 A1, CN 108 209 753 A und CN 111 265 154 A betreffen weitere relevante Systeme.

Bekannte Ansätze beschränken sich auf eine Bearbeitung der Bodenfläche und behandeln die Gegenstände oft nicht schonend. Eine der vorliegenden Erfindung zu Grunde liegende Aufgabe besteht in der Angabe einer verbesserten Technik zur Bearbeitung einer Bodenfläche in einem Haushalt. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Bearbeitungsgerät zur Vorbereitung einer Bodenfläche in einem Haushalt für eine automatische Bodenbearbeitung: eine Erfassungseinrichtung zur Erfassung eines Gegenstands auf der Bodenfläche; eine Antriebseinrichtung zur Bewegung des Bearbeitungsgeräts auf der Bodenfläche; einen Sammelbehälter für Gegenstände; und eine Sammelvorrichtung zur Aufnahme des Gegenstands in den Sammelbehälter.

Es wurde erkannt, dass eine Bodenbearbeitungsmaschine nicht gut dazu ausgebaut werden kann, die Bodenfläche sowohl von Gegenständen zu befreien als auch anschließend zu bearbeiten. Ein kombiniertes Gerät ist üblicherweise größer und weniger wendig als eine bekannte Bodenbearbeitungsmaschine oder das hierin vorgeschlagene Bearbeitungsgerät. Es wird daher vorgeschlagen, ein separates Bearbeitungsgerät vorzusehen, das die Bodenfläche von Gegenständen befreit, indem sie sie einsammelt. Die Bearbeitung der Bodenfläche kann anschließend durch ein anderes Gerät erfolgen. Durch die erfindungsgemäße Aufgabenteilung können beide Aufgaben verbessert durch jeweils spezialisierte Geräte ausgeführt werden. Das Bearbeitungsgerät kann einen eingesammelten Gegenstand verbessert vorsichtig behandeln, sodass dieser durch die Behandlung vorzugsweise nicht beschädigt oder verschmutzt wird.

Der Gegenstand kann insbesondere ein Spielzeug umfassen. Viele Spielzeuge umfassen relativ kleine Einzelteile, die beim Spielen leicht auf der Bodenfläche verteilt werden können. Beispielhafte solche Spielzeuge umfassen Puzzlestücke oder Bausteine, Gliedmaßen von Puppen oder Mosaiksteine. Solches Spielzeug ist üblicherweise ausreichend stabil, um durch das Bearbeitungsgerät sicher gehandhabt zu werden. Gleichzeitig kann ein solcher Gegenstand leicht von einem anderen Gegenstand unterschieden werden, der möglicherweise nicht durch das Bearbeitungsgerät eingesammelt werden soll, beispielsweise ein Lebensmittel oder ein Schmutzklumpen.

Das Bearbeitungsgerät kann eine Kamera zur optischen Abtastung des Gegenstands umfassen. So kann der Gegenstand aus nächster Nähe abgetastet werden, um ihn zu identifizieren oder den Vorgang des Einsammelns verbessert zu steuern. In einer weiteren Ausführungsform kann auch ein LiDAR- oder Radarsensor dazu verwendet werden, einen Gegenstand auf der Bodenfläche zu erfassen. Weiter bevorzugt werden unterschiedliche Sensoren verwendet, um den Gegenstand aus unterschiedlichen Entfernungen zu erfassen und zu charakterisieren. So kann mittels des LiDAR- oder Radarsensors zuerst eine Position und/oder Größe des Gegenstands bestimmt werden. Dann kann das Bearbeitungsgerät in eine vorbestimmte Entfernung zum Gegenstand gebracht werden und den Gegenstand von dort aus optisch abtasten. Eine Abtastung des Gegenstands kann auch von einer anderen Einrichtung empfangen werden.

Zur Erkennung mehrerer vorbestimmter Gegenstände kann eine Verarbeitungseinrichtung vorgesehen sein. Die Verarbeitungseinrichtung kann nach Art eines künstlichen neuronalen Netzwerks (KNN) arbeiten. In einer Ausführungsform können mehrere Abtastungen gleicher oder unterschiedlicher Sensoren einer Erkennung zu Grunde gelegt werden.

Die Verarbeitungseinrichtung kann dazu eingerichtet sein, einen vorbestimmten Gegenstand auf der Basis von Bildern aus unterschiedlichen Perspektiven zu erkennen. Dazu kann das Bearbeitungsgerät in verschiedene Positionen relativ zu einem Gegenstand gebracht werden und jeweils eines oder mehrere Bilder anfertigen. In einer weiteren Ausführungsform kann auch ein Bild oder eine Abtastung eines anderen Geräts verwendet werden, beispielsweise einer Basisstation oder eines Bodenreinigers.

Die Sammelvorrichtung ist dazu eingerichtet, den Gegenstand mittels eines Luftstroms von der Bodenfläche aufzunehmen. Dazu kann ein Saugwerk nach Art eines Staubsaugers am Bearbeitungsgerät vorgesehen sein. Ein Saugmund kann zielgerichtet über dem Gegenstand platziert und mittels des Luftstroms eingesaugt werden. So kann eine schonende und sichere Handhabung des Gegenstands sichergestellt sein. Ein größerer Gegenstand kann aufgrund seiner Masse und/oder seiner Abmessungen nicht aufgenommen werden. Ein aufzunehmender Gegenstand kann gut von einem nahe gelegenen, nicht aufzunehmenden Gegenstand unterschieden werden. Optional können auch mehrere kleine Gegenstände gleichzeitig aufgesaugt werden.

Zusätzlich sind ein Zwischenbehälter zur Abscheidung des Gegenstands aus dem Luftstrom und eine Übernahmevorrichtung zur Übernahme eines Gegenstands aus dem Zwischenbehälter in den Sammelbehälter vorgesehen. Der Zwischenbehälter kann während des Aufnehmens vom Luftstrom durchströmt sein und der Gegenstand kann aufgrund seiner Masse direkt oder nach Art eines Zyklons abgeschieden werden, sodass er in dem Zwischenbehälter verbleibt. Beispielsweise wenn der Zwischenbehälter voll ist, kann er in den Sammelbehälter entleert werden. Dazu kann der Zwischenbehälter vorübergehend geöffnet werden und eingesammelte Gegenstände können per Schwerkraft oder beispielsweise mittels einer archimedischen Schnecke, einer Eimerkette oder eines Förderbands in den Sammelbehälter bewegt werden. So kann der Sammelbehälter stets geöffnet bleiben, sodass während des Betriebs des Bearbeitungsgeräts ein Gegenstand aus ihm entnommen oder hineingelegt werden kann. Das Bearbeitungsgerät kann so verbessert kooperativ mit einer Person die Reinigung der Bodenfläche vorbereiten.

Die Sammelvorrichtung kann zusätzlich einen Greifer umfassen und dazu eingerichtet sein, den Gegenstand mittels des Greifers von der Bodenfläche aufzunehmen. Der Greifer kann beispielsweise nach Art eines Roboterarms ausgeführt sein. Bevorzugt kann der Greifer dazu angesteuert werden, sich dem Gegenstand von oben zu nähern und den Gegenstand nach Art einer Pinzette oder eines Mehr-Finger-Greifers aufzunehmen. Optional kann der Arm auch dazu verwendet werden, den Zwischenbehälter zu öffnen, in den Sammelbehälter auszuleeren und/oder wieder zu verschließen.

Einem vorbestimmten Gegenstand kann eine Elastizität zugeordnet sein, wobei die Verarbeitungseinrichtung dazu eingerichtet ist, den Greifer in Abhängigkeit der Elastizität zur Aufnahme des Gegenstands anzusteuern. In entsprechender Weise kann dem vorbestimmten Gegenstand ein Gewicht oder eine Oberflächenbeschaffenheit zugeordnet sein. Der Greifer kann verbessert in Abhängigkeit eines solchermaßen hinterlegten Parameters gesteuert werden, um den Gegenstand sicher und beschädigungsfrei aufzunehmen.

Das Bearbeitungsgerät ist weiter bevorzugt dazu eingerichtet, einen Abschnitt der Bodenfläche, der von Gegenständen befreit ist, zur Bearbeitung durch einen automatischen Bodenreiniger freizugeben. Dazu kann eine Beschreibung des Abschnitts an eine Basisstation oder direkt an eine Bodenbearbeitungsmaschine bereitgestellt werden. In einer Ausführungsform bereitet das Bearbeitungsgerät die gesamte Bodenfläche vor, bevor sie diese zur Bearbeitung freigibt. In einer anderen Ausführungsform wird zur ein Teil der Bodenfläche vorbereitet, bevor der Teil freigegeben wird. Während die Bodenbearbeitungsmaschine diesen Teil bearbeitet, kann das Bearbeitungsgerät schon einen weiteren Teil der Bodenfläche vorbereiten.

Nach einem weiteren Aspekt der vorliegenden Erfindung umfasst ein System ein hierin beschriebenes Bearbeitungsgerät und eine Bodenbearbeitungsmaschine, insbesondere einen automatischen Bodenreiniger. Die Bodenbearbeitungsmaschine kann einen oder mehrere Sensoren zur Abtastung seines Umfelds aufweisen. Abtastungen können an das Bearbeitungsgerät bereitgestellt werden. In einer Ausführungsform können die Bodenbearbeitungsmaschine und das Bearbeitungsgerät dazu angesteuert werden, eines oder mehrere auf der Bodenfläche liegende Gegenstände abzutasten, wobei die Gegenstände auf der Basis der Abtastungen erkannt werden können. Dann kann das Bearbeitungsgerät dazu angesteuert werden, einen erkannten Gegenstand aufzusammeln.

Nach noch einem weiteren Aspekt der vorliegenden Erfindung umfasst ein System ein hierin beschriebenes Bearbeitungsgerät und eine Basisstation. Dabei ist das Bearbeitungsgerät bevorzugt dazu eingerichtet, Gegenstände aus dem Sammelbehälter an der Basisstation bereitzustellen. Die Basisstation kann dazu eingerichtet sein, eine Übernahme von Gegenständen aus dem Sammelbehälter zu unterstützen. Außerdem kann die Basisstation über einen Sensor, insbesondere einen LiDAR- oder Radarsensor oder eine Kamera verfügen, mittels dem zumindest ein Abschnitt der Bodenfläche abgetastet werden kann. Dabei anfallende Sensorwerte, etwa in Form eines Bilds, können verwendet werden, um einen erfassten Gegenstand zu lokalisieren, zu charakterisieren oder zu erkennen.

Nach wieder einem weiteren Aspekt der vorliegenden Erfindung umfasst ein Verfahren zum Vorbereiten einer Bodenfläche in einem Haushalt für eine automatische Bodenbearbeitung Schritte des Erfassens eines Gegenstands auf der Bodenfläche; des Bewegens eines Bearbeitungsgeräts auf der Bodenfläche zum erfassten Gegenstand; und des Aufnehmens des Gegenstands in einen mitgeführten Sammelbehälter. Dabei wird der Gegenstand mittels eines Luftstroms von der Bodenfläche aufgenommen und aus dem Luftstrom in einen Zwischenbehälter abgeschieden. Anschließend übernimmt eine Übernahmevorrichtung den Gegenstand aus dem Zwischenbehälter in den Sammelbehälter.

Bevorzugt wird die vom Gegenstand befreiten Bodenfläche anschließend mittels eines Bodenreinigers bearbeitet.

Das Bearbeitungsgerät umfasst bevorzugt eine elektronische Verarbeitungseinrichtung, die dazu eingerichtet sein kann, ein hierin beschriebenes Verfahren ganz oder teilweise auszuführen. Die Verarbeitungseinrichtung kann auch außerhalb des Bearbeitungsgeräts vorgesehen sein, beispielsweise in einer Basisstation oder an Bord eines Bodenreinigers. Die Verarbeitungseinrichtung kann einen integrierten Schaltkreis, einen programmierbaren Mikrocomputer oder einen Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens oder des Systems können auf die Vorrichtung übertragen werden oder umgekehrt.

Die Erfindung wird nun unter Bezug auf die beiliegenden Figuren genauer beschrieben, in denen:
- Figur 1: ein System;
- Figur 2: ein Bearbeitungsgerät in einer ersten Variante;
- Figur 3: ein Bearbeitungsgerät in einer zweiten Variante; und
- Figur 4: ein Ablaufdiagramm eines Verfahrens
darstellt.

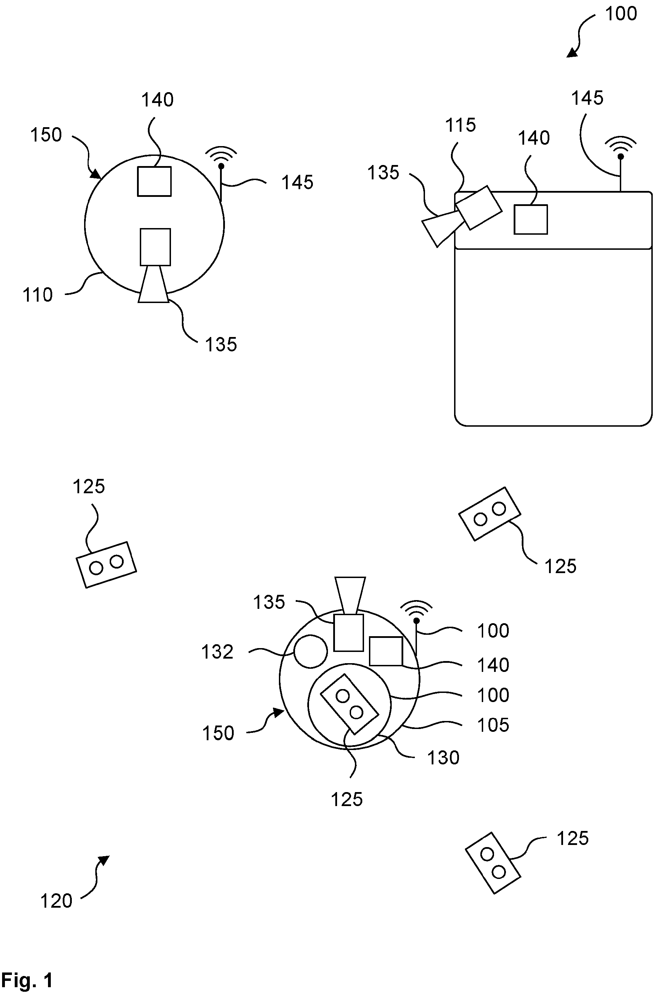

Figur 1 zeigt ein System 100, das ein Bearbeitungsgerät 105 sowie einen Bodenreiniger 110 und/oder eine Basisstation 115 umfasst. Die Geräte 105 bis 115 sind jeweils Haushaltsgeräte und befinden sich in einem Haushalt mit einer Bodenfläche 120. Zusammen sind die Geräte 105 bis 115 dazu eingerichtet, die Bodenfläche 120 zu bearbeiten, insbesondere zu reinigen.

Auf der Bodenfläche 120 können sich einer oder mehrere Gegenstände 125 befinden, wobei ein Gegenstand 125 insbesondere ein Spielzeug umfassen kann. Als Gegenstände 125 im Sinne des vorliegenden Dokuments können nur solche gelten, deren Größe und/oder Gewicht in einem vorbestimmten Bereich liegt. Weitere Einschränkungen können beispielsweise bezüglich einer Farbe, eines Materials, einer Anzahl, einer Beschaffenheit oder einer Konsistenz gelten. Wie unten noch genauer ausgeführt wird, sind bevorzugt mehrere Gegenstände 125 vorbestimmt, die bearbeitet werden. Andere Objekte können als feststehende Hindernisse betrachtet werden.

Das Bearbeitungsgerät 105 ist dazu eingerichtet, Gegenstände 125 von der Bodenfläche 120 in einen mitgeführten Sammelbehälter 130 aufzusammeln und optional an einer vorbestimmten Stelle bereitzustellen, beispielsweise an der Basisstation 115. Der Sammelbehälter 130 ist bevorzugt an seiner Oberseite offen, sodass ein Zugriff auf enthaltene Gegenstände 125 erleichtert ist. Zur Aufnahme eines Gegenstands 125 kann das Bearbeitungsgerät 105 eine Aufnahmevorrichtung 132 umfassen.

Zur berührungslosen Abtastung der Bodenfläche 120 kann außerdem eine Kamera 135 vorgesehen sein. Die Kamera 135 ist bevorzugt eine einfache Kamera 135 zur optischen Abtastung der Bodenfläche und kann insbesondere einen CMOS-Sensor zur Nutzung in einem großen Helligkeitsbereich aufweisen. Es kann auch ein Radar- oder LiDAR-Sensor oder ein Ultraschallsensor zur Abtastung der Bodenfläche 120 vorgesehen sein. Eine Verarbeitungseinrichtung 140 ist bevorzugt dazu eingerichtet, eine Position eines Gegenstands 125 auf der Basis einer Abtastung zu bestimmen. Ferner kann ein Gegenstand 125 auf der Basis einer oder mehrerer Abtastungen erkannt werden.

Weiter bevorzugt umfasst das Bearbeitungsgerät 105 eine Kommunikationseinrichtung 145, um mit dem Bearbeitungsgerät 110 und/oder der Basisstation 115 zu kommunizieren. Dort kann jeweils eine weitere Kamera 135 bzw. ein weiterer berührungsloser Sensor zur Abtastung der Bodenfläche 120 vorgesehen sein und Sensordaten einer Abtastung können an das Bearbeitungsgerät 105 übermittelt werden. In noch einer weiteren Ausführungsform können die Positionierung und/oder Erkennung von Gegenständen 125 auf der Bodenfläche 120 auch außerhalb des Bearbeitungsgeräts 105 erfolgen und ein Bestimmungsergebnis kann an das Bearbeitungsgerät 105 übermittelt werden.

Zur Bewegung auf der Bodenfläche 120 kann eine Antriebseinrichtung 150 vorgesehen sein. Eine Navigation erfolgt bevorzugt in bekannter Weise bezüglich einer Umgebungskarte, die auf der Basis von Abtastungen mittels des Sensors 135 mittels Simultaneous Localization And Mapping (SLAM) aktualisiert werden kann.

Der Bodenreiniger 110 ist dazu eingerichtet, die Bodenfläche 120 zu bearbeiten und insbesondere zu reinigen. Beispielsweise kann der Bodenreiniger 110 einen Saugroboter, einen Kehrroboter, einen Wischroboter oder eine Kombination zweier oder mehrerer solcher Geräte umfassen. Eine Navigation, eine Datenverarbeitung oder ein Antrieb können in entsprechender Weise wie am Bearbeitungsgerät 105 vorgesehen sein.

Die optionale Basisstation 115 ist dazu eingerichtet, das Bearbeitungsgerät 105 und/oder den Bodenreiniger 110 zu versorgen oder Gegenstände von ihm zu übernehmen. Insbesondere kann dort ein Gerät 105, 110 mit elektrischen Strom aufgeladen werden. Wasser oder eine andere Reinigungsflüssigkeit kann bereitgestellt werden. Schmutz oder Abwasser können aufgenommen werden. Eingesammelte Gegenstände 125 können abgeladen werden. Weiter kann die Basisstation 115 dazu eingerichtet sein, eine Wartung an einem Gerät 105, 110 durchführen, beispielsweise eine Reinigung oder einen Austausch eines Arbeits- oder Verschleißelements, beispielsweise eines Bodentuchs.

Es können auch mehrere Bearbeitungsgeräte 105, mehrere Bodenreiniger 110 und/oder mehrere Basisstationen 115 vom System umfasst sein. Weiter optional können mehrere Systeme 100 in einem Raum des Haushalts vorgesehen sein.

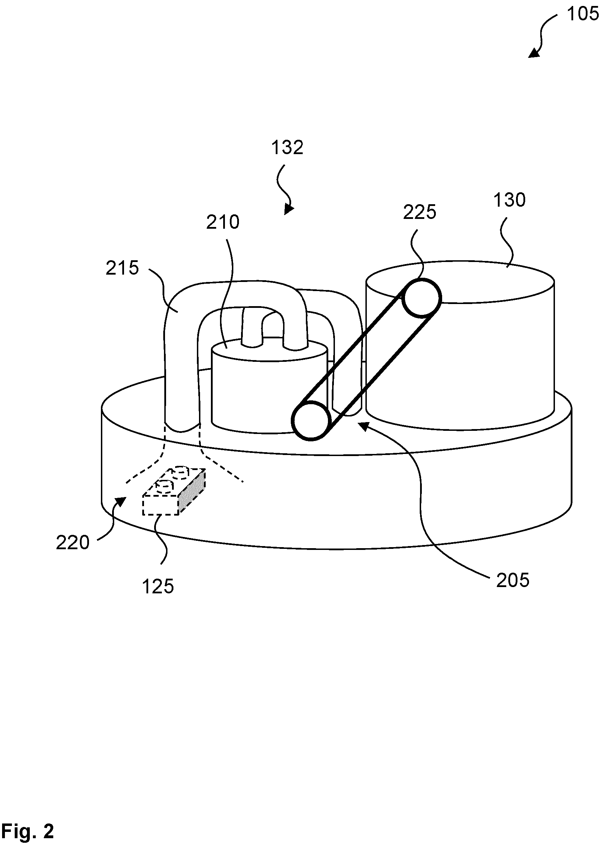

Figur 2 zeigt ein Bearbeitungsgerät 105 in einer ersten Variante. Das Bearbeitungsgerät 105 kann auf der Basis eines üblichen Bodenreinigers 110 aufgebaut sein, beispielsweise in der Form eines flachen Zylinders. In der dargestellten Variante ist die Aufnahmevorrichtung 132 dazu eingerichtet, einen Gegenstand 125 mittels eines Luftstroms von der Bodenfläche 120 aufzunehmen.

Dazu umfasst die Aufnahmevorrichtung 132 ein Saugwerk 205, das dazu eingerichtet ist, einen Luftstrom zu erzeugen. Stromaufwärts des Saugwerks 205 ist bevorzugt ein Zwischenbehälter 210 vorgesehen, der dazu eingerichtet ist, einen vom Luftstrom mitgerissenen Gegenstand 125 abzuscheiden und zumindest temporär aufzunehmen. Der Zwischenbehälter 210 ist mittels einer Saugleitung 215 mit einem Saugmund 220 verbunden, an dem der Luftstrom eintreten kann. Bevorzugt befindet sich der Saugmund 220 wie dargestellt innerhalb bzw. unterhalb des Bearbeitungsgeräts 105.

Aufgesammelte Gegenstände 125 im Zwischenbehälter 210 können mittels einer Übernahmevorrichtung 225 in den Sammelbehälter 130 abgegeben werden. Rein beispielhaft ist die Übernahmevorrichtung 225 schematisch als Förderband dargestellt, in anderen Ausführungsformen kann auch beispielsweise eine Eimerkette oder eine ähnliche Einrichtung vorgesehen sein. In noch einer weiteren Ausführungsform kann der Zwischenbehälter 130 per Schwerkraft in den Sammelbehälter 130 entleert werden. Dazu kann der Zwischenbehälter 130 oberhalb des Sammelbehälters 130 angeordnet sein oder zum Entleeren dorthin befördert werden. Das Entleeren kann ein Öffnen des Zwischenbehälters 130 erfordern. Der Sammelbehälter 130 ist bevorzugt oben offen und von dort aus zugänglich, während das Bearbeitungsgerät 105 arbeitet.

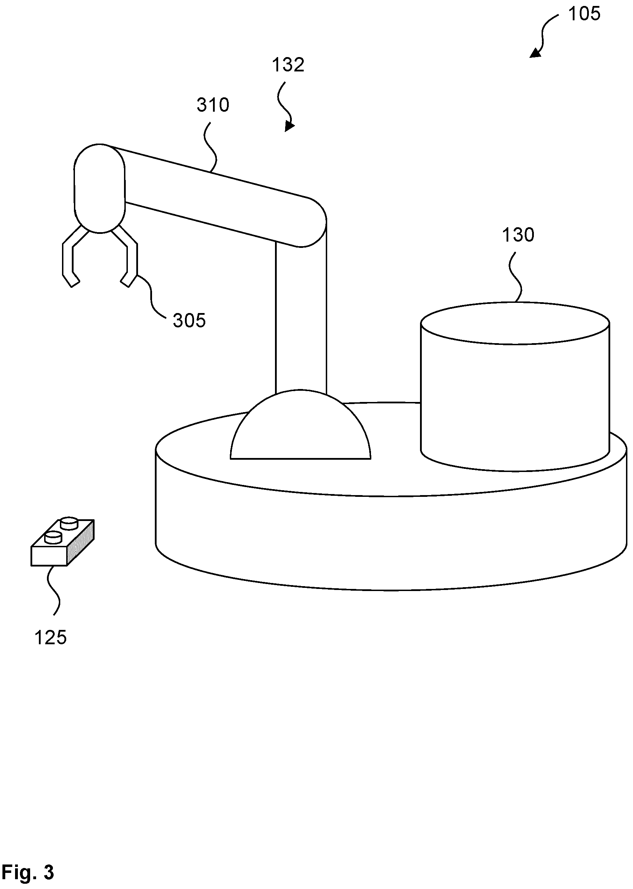

Figur 3 zeigt ein Bearbeitungsgerät 105 in einer zweiten Variante, die sich von der in Figur 2 gezeigten ersten Variante hauptsächlich darin unterscheidet, dass die Aufnahmevorrichtung 132 einen Greifer 305 umfasst, der bevorzugt an einem Greifarm 310 angebracht ist. Der Greifer 305 und/oder der Greifarm 310 können so gesteuert werden, dass ein Gegenstand 125 aufgenommen und in den Sammelbehälter 130 gelegt wird. Das Ansteuern eines Gegenstands 125, das Steuern des Greifarms 310 und/oder das Öffnen bzw. Schließen des Greifers 305 können in Abhängigkeit des Gegenstands 125 gesteuert werden. Beispielsweise kann eine Greifkraft oder in Abhängigkeit davon gesteuert werden, wie weich, wie schwer, wie glatt oder wie beschaffen der Gegenstand 125 ist. Der Gegenstand 125 kann mit der Kamera 135 (nicht dargestellt) erfasst werden, während er mittels des Greifers 305 gehandhabt wird. Der Gegenstand 125 kann erkannt werden und dem erkannten Gegenstand 125 können eines oder mehrere Attribute zugeordnet sein, die für die Handhabung beachtet werden können. Ein Attribut kann insbesondere eine Masse, eine Größe, eine Kompressibilität oder eine Oberflächenrauigkeit umfassen.

Die Varianten der Figuren 2 und 3 können auch gemeinsam an einem Bearbeitungsgerät 105 vorgesehen sein. So kann insbesondere ein kleinerer Gegenstand 125 mittels des Saugwerks 205 und ein größerer mittels des Greifers 305 aufgenommen und jeweils in den Sammelbehälter 130 platziert werden. In einer weiteren Ausführungsform kann der Greifer 305 mit dem Greifarm 310 auch als Übernahmevorrichtung 225 dienen. Dazu kann der Zwischenbehälter 210 mittels des Greifers 305 vom Saugwerk 205 und der Saugleitung 215 getrennt, über den Sammelbehälter 130 gebracht und/oder geöffnet werden. Alternativ kann der Zwischenbehälter 210 mittels des Greifers 305 geöffnet werden und Gegenstände 125 können mittels des Greifers 305 aus dem Zwischenbehälter 210 entnommen und in den Sammelbehälter 130 gelegt werden.

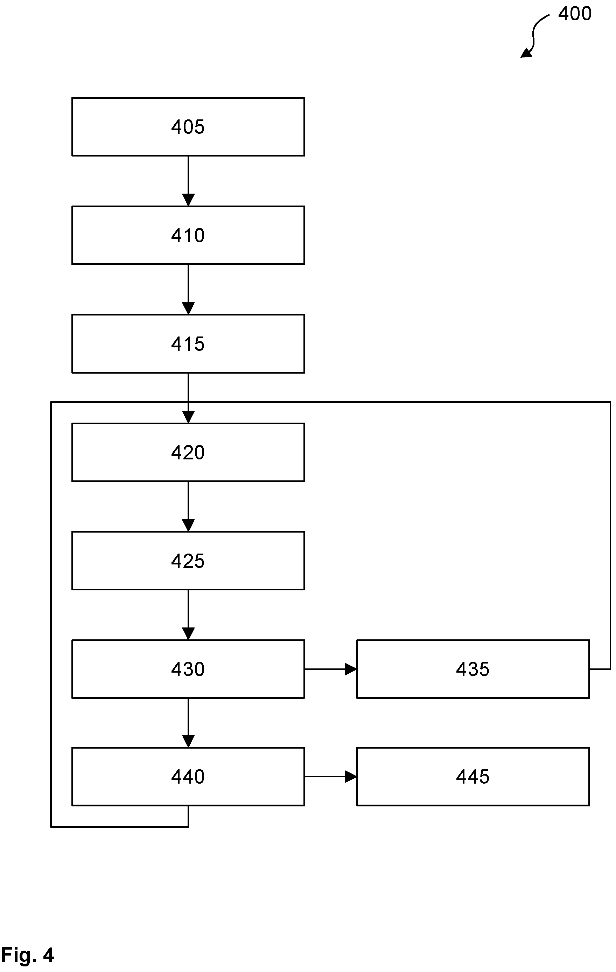

Figur 4 zeigt ein Ablaufdiagramm eines Verfahrens 400 zur Bearbeitung einer Bodenfläche 120. Das Verfahren 400 kann mittels einer Verarbeitungseinrichtung an Bord eines Bearbeitungsgeräts 105, eines Bodenreinigers 110 oder einer Basisstation 114 ausgeführt werden. Optional kann das Verfahrens 400 auch verteilt ablaufen, indem die genannten Geräte 105 bis 115 passend miteinander kommunizieren, um Anfragen oder Ergebnisse auszutauschen.

In einem Schritt 405 kann ein Raum mit der zu bearbeitenden Bodenfläche 120 abgetastet werden. Dazu kann die Bodenfläche 120 mittels eines oder mehrerer Sensoren 135 oder anderer berührungsloser Sensoren abgetastet werden. Das Bearbeitungsgerät 105 oder der Bodenreiniger 110 können sich zur verbesserten Abtastung auf der Bodenfläche 120 bewegen. Das Abtasten kann zunächst nur einen Teil der Bodenfläche 120 betreffen und ein weiterer Teil kann im Lauf des weiteren Verfahrens 400 oder in einem separaten Durchlauf abgetastet werden.

In einem Schritt 410 kann ein Gegenstand 125, insbesondere ein Spielzeug, auf der Bodenfläche 120 erfasst werden. Üblicherweise werden mehrere Gegenstände 125 erfasst, die auf der Bodenfläche 120 verteilt liegen können. Eine Position eines Gegenstands 125 auf der Bodenfläche 120 kann mittels Triangulation bestimmt werden, wenn Abtastungen von wenigstens zwei verschiedenen Positionen aus vorliegen. Weiter bevorzugt wird der Gegenstand 125 auch erkannt. In erster Linie soll der Gegenstand 125 von einem nicht aufzunehmenden Objekt, beispielsweise einem Kabel, einem Möbelstück, unterschieden werden. Weiter bevorzugt wird der Gegenstand 125 spezifisch erkannt bzw. kategorisiert. So können mehrere vorbestimmte Gegenstände 125 bekannt sein, die aufgenommen werden sollen, und ein erfasster Gegenstand 125 kann nur weiter beachtet werden, wenn er bekannt ist. Einem bekannten Gegenstand 125 können eines oder mehrere Attribute zugeordnet sein, die einer Handhabung zu Grunde gelegt werden können, beispielsweise eine Masse oder eine Größe.

In einem Schritt 415 kann ein Weg für das Bearbeitungsgerät 105 geplant werden, um das Gerät 105 nacheinander an mehrere oder alle der Gegenstände 125 zu führen. Ein Weg kann so bestimmt sein, dass er zu einem Gegenstand 125 führt, ohne über einen anderen Gegenstand 125 zu führen, sodass keiner der Gegenstände 125 durch das Bearbeitungsgeräts 105 überfahren werden muss. Bei der Wegplanung kann berücksichtigt werden, dass nur eine begrenzte Anzahl Gegenstände 125 durch das Bearbeitungsgerät 105 aufgenommen werden können, bevor der Sammelbehälter 130 ausgeleert werden muss. Es können daher mehrere Wege geplant werden, die jeweils an einen oder mehrere Gegenstände 125 führen, wobei alle besuchten Gegenstände 125 im Sammelbehälter 130 aufgenommen werden können. Ein Weg kann an einer Position enden, an der die Gegenstände 125 aus dem Sammelbehälter 130 entnommen werden können, beispielsweise an der Basisstation 115.

In einem Schritt 420 kann das Bearbeitungsgerät 105 einen der erfassten Gegenstände 125 auf einem der bestimmten Wege anfahren. Eine bordeigene Kamera 135 kann verwendet werden, um das Bearbeitungsgerät 105 gegenüber dem Gegenstand 125 so zu positionieren, dass der Gegenstand 125 aufgenommen werden kann. Dann kann die Aufnahme des Gegenstands 125 gesteuert werden. In der ersten Variante kann dazu das Saugwerk 205 aktiviert werden. In der zweiten Variante kann der Greifer 305 dazu angesteuert werden, den Gegenstand 125 zu greifen und aufzunehmen. Dieser Vorgang wird bevorzugt unterstützt, indem der Gegenstand 125 und der Greifer 305 dabei mittels der bordeigenen Kamera 130 - oder einer Kamera 130 des Bodenreinigers 110 oder der Basisstation 115 - abgetastet werden.

In einem Schritt 425 kann der Gegenstand 125 aufgenommen und in den Sammelbehälter 130 verbracht werden. Bevorzugt wird eine Greif- oder Bewegungskraft so dosiert, dass eine Verletzung einer nicht erkannten Person ausgeschlossen ist. Außerdem kann der Vorgang unterbrochen werden, falls eine Person oder ein Haustier im Bereich des Bearbeitungsgeräts 105 erfasst wird.

Anschließend kann in einem Schritt 430 bestimmt werden, ob der Sammelbehälter 130 voll ist. Ist dies der Fall oder ist der letzte Gegenstand 125 auf einem geplanten Weg aufgenommen worden, so kann das Bearbeitungsgerät 105 zu einem vorbestimmten Abladeplatz gefahren werden, wo der Sammelbehälter 130 ausgeleert werden kann. Dieser Vorgang kann auch gesteuert werden, wenn ein Gegenstand 125 nicht in den Sammelbehälter 130 aufgenommen werden konnte, insbesondere weil Gegenstände 125 im Sammelbehälter 130 unvorteilhaft angeordnet sind.

In einem Schritt 440 kann ein Bereich der Bodenfläche 120, der durch das Aufnehmen von Gegenständen 125 befreit wurde, für die Bearbeitung durch den Bodenreiniger 110 freigegeben werden. Bevorzugt wurde ein Weg des Bearbeitungsgeräts 105 bereits im Schritt 415 derart geplant, dass sich durch das Aufsammeln ein zusammenhängender Bereich ergibt, der danach leicht bearbeitet und insbesondere gereinigt werden kann. Weiter bevorzugt ist der Bereich so gewählt, dass das Bearbeitungsgerät 105 damit fortfahren kann, einen weiteren Bereich der Bodenfläche 120 von Gegenständen 125 zu befreien, während der erste Bereich bereits durch den Bodenreiniger 110 gereinigt wird. Weiter bevorzugt liegt der erste Bereich so, dass das Bearbeitungsgerät 105 einen gereinigten Bereich nicht mehr befahren muss, wenn er von einem anderen Bereich zur Abladestelle oder zur Basisstation 115 oder in entgegengesetzter Richtung fährt.

## Patentansprüche

1. Bearbeitungsgerät (105) zur Vorbereitung einer Bodenfläche (120) in einem Haushalt für eine automatische Bodenbearbeitung, wobei das Bearbeitungsgerät (105) folgendes umfasst:
- eine Erfassungseinrichtung (135) zur Erfassung eines Gegenstands (125) auf der Bodenfläche (120);
- eine Antriebseinrichtung (150) zur Bewegung des Bearbeitungsgeräts (105) auf der Bodenfläche (120);
- einen Sammelbehälter (130) für Gegenstände (125); und
- eine Sammelvorrichtung (205, 305) zur Aufnahme des Gegenstands (125) in den Sammelbehälter (130);
**dadurch gekennzeichnet, dass**
- die Sammelvorrichtung (205) dazu eingerichtet ist, den Gegenstand (125) mittels eines Luftstroms von der Bodenfläche (120) aufzunehmen, und
- das Bearbeitungsgerät (105) einen Zwischenbehälter (210) zur Abscheidung des Gegenstands (125) aus dem Luftstrom und eine Übernahmevorrichtung (225) zur Übernahme des Gegenstands (125) aus dem Zwischenbehälter (210) in den Sammelbehälter (130) umfasst.

2. Bearbeitungsgerät (105) nach Anspruch 1, wobei das Bearbeitungsgerät dazu eingerichtet ist, Spielzeug einzusammeln.

3. Bearbeitungsgerät (105) nach Anspruch 1 oder 2, ferner umfassend eine Kamera (130) zur optischen Abtastung des Gegenstands (125).

4. Bearbeitungsgerät (105) nach einem der vorangehenden Ansprüche, ferner umfassend eine Verarbeitungseinrichtung (140) zur Erkennung mehrerer vorbestimmter Gegenstände (125).

5. Bearbeitungsgerät (105) nach Anspruch 4, wobei die Verarbeitungseinrichtung (140) dazu eingerichtet ist, einen vorbestimmten Gegenstand (125) auf der Basis von Bildern aus unterschiedlichen Perspektiven zu erkennen.

6. Bearbeitungsgerät (105) nach einem der vorangehenden Ansprüche, wobei die Sammelvorrichtung einen Greifer (305) umfasst und dazu eingerichtet ist, den Gegenstand (125) mittels des Greifers (305) von der Bodenfläche (120) aufzunehmen.

7. Bearbeitungsgerät (105) nach Ansprüchen 4 und 6, wobei einem vorbestimmten Gegenstand (125) eine Elastizität zugeordnet ist und die Verarbeitungseinrichtung (140) dazu eingerichtet ist, den Greifer (305) in Abhängigkeit der Elastizität zur Aufnahme des Gegenstands (125) anzusteuern.

8. System (100), umfassend ein Bearbeitungsgerät (105) nach einem der vorangehenden Ansprüche und einen automatischen Bodenreiniger (110).

9. System (100), umfassend ein Bearbeitungsgerät (105) nach einem der vorangehenden Ansprüche und eine Basisstation (115), wobei das Bearbeitungsgerät (105) dazu eingerichtet ist, Gegenstände (125) aus dem Sammelbehälter (130) an der Basisstation (115) bereitzustellen.

10. Verfahren zum Vorbereiten einer Bodenfläche (120) in einem Haushalt für eine automatische Bodenbearbeitung, wobei das Verfahren folgende Schritte umfasst:
- Erfassen (405, 410) eines Gegenstands (125) auf der Bodenfläche (120);
- Bewegen (420) eines Bearbeitungsgeräts (105) auf der Bodenfläche (120) zum erfassten Gegenstand (125); und
- Aufnehmen (425) des Gegenstands (125) in einen mitgeführten Sammelbehälter (130);
**dadurch gekennzeichnet, dass**
- der Gegenstand (125) mittels eines Luftstroms von der Bodenfläche (120) aufgenommen wird,
- der Gegenstand (125) aus dem Luftstrom in einen Zwischenbehälter (210) abgeschieden wird und
- eine Übernahmevorrichtung (225) den Gegenstand (125) aus dem Zwischenbehälter (210) in den Sammelbehälter (130) übernimmt.

11. Verfahren nach Anspruch 10, ferner umfassend ein Bearbeiten der vom Gegenstand (125) befreiten Bodenfläche (120) mittels eines Bodenreinigers (110).

## Claims

1. Treatment appliance (105) for preparing a floor area (120) in a household for automatic floor treatment, wherein the treatment appliance (105) comprises the following:
- a detection facility (135) for detecting an object (125) on the floor area (120);
- a drive facility (15) for moving the treatment appliance (105) on the floor area (120);
- a collection container (130) for objects (125); and
- a collection apparatus (205, 305) for gathering the objects (125) into the collection container (130);
**characterised in that**
- the collection apparatus (205) is configured to gather the object (125) from the floor area (120) by means of an air flow, and
- the treatment appliance (105) comprises an intermediate container (210) for separating the object (125) from the air flow and a transfer apparatus (225) for transferring the object (125) from the intermediate container (210) into the collection container (130).

2. Treatment appliance (105) according to claim 1, wherein the treatment appliance is configured to collect toys.

3. Treatment appliance (105) according to claim 1 or 2, further comprising a camera (130) for optical scanning of the object (125).

4. Treatment appliance (105) according to one of the preceding claims, further comprising a processing facility (140) for identifying multiple predetermined objects (125).

5. Treatment appliance (105) according to claim 4, wherein the processing facility (140) is configured to identify a predetermined object (125) on the basis of images from different perspectives.

6. Treatment appliance (105) according to one of the preceding claims, wherein the collection apparatus comprises a gripper (305) and is configured to gather the object (125) from the floor area (120) by means of the gripper (305).

7. Treatment appliance (105) according to claims 4 and 6, wherein a predetermined object (125) is assigned an elasticity and the processing facility (140) is configured to actuate the gripper (305) as a function of the elasticity to gather the object (125).

8. System (100), comprising a treatment appliance (105) according to one of the preceding claims and an automatic floor cleaner (110).

9. System (100), comprising a treatment appliance (105) according to one of the preceding claims and a base station (115), wherein the treatment appliance (105) is configured to provide objects (125) from the collection container (130) at the base station (115).

10. Method for preparing a floor area (120) in a household for an automatic floor treatment, wherein the method comprises the following steps:
- detecting (405, 410) an object (125) on the floor area (120);
- moving (420) a treatment appliance (105) on the floor area (120) towards the detected object (125); and
- gathering (425) the object (125) into a collection container (130) that is carried along;
**characterised in that**
- the object (125) is gathered from the floor area (120) by means of an air flow,
- the object (125) is separated from the air flow into an intermediate container (210) and
- a transfer apparatus (225) transfers the object (125) from the intermediate container (210) into the collection container (130).

11. Method according to claim 10, further comprising a treatment of the floor area (120) from which the object (125) has been removed, by means of a floor cleaner (110).

## Revendications

1. Appareil de traitement (105) pour la préparation d'une surface de sol (120) dans un ménage pour un traitement automatique du sol, l'appareil de traitement (105) comprenant :
- un dispositif de détection (135) pour la détection d'un objet (125) sur la surface de sol (120) ;
- un dispositif d'entraînement (150) pour le déplacement de l'appareil de traitement (105) sur la surface de sol (120) ;
- un récipient collecteur (130) pour des objets (125) ; et
- un dispositif de collecte (205, 305) pour l'accueil de l'objet (125) dans le récipient collecteur (130) ;
**caractérisé en ce que**
- le dispositif de collecte (205) est aménagé pour ramasser l'objet (125) sur la surface de sol (120) au moyen d'un flux d'air, et
- l'appareil de traitement (105) comprend un récipient intermédiaire (210) pour la séparation de l'objet (125) du flux d'air et un dispositif de transfert (225) pour le transfert de l'objet (125) hors du récipient intermédiaire (210) dans le récipient collecteur (130).

2. Appareil de traitement (105) selon la revendication 1, dans lequel l'appareil de traitement est aménagé pour collecter des jouets.

3. Appareil de traitement (105) selon la revendication 1 ou 2, comprenant en outre une caméra (130) pour le balayage optique de l'objet (125).

4. Appareil de traitement (105) selon l'une des revendications précédentes, comprenant en outre un dispositif de traitement (140) pour la reconnaissance de plusieurs objets prédéterminés (125).

5. Appareil de traitement (105) selon la revendication 4, dans lequel le dispositif de traitement (140) est aménagé pour reconnaître un objet prédéterminé (125) sur la base d'images prises sous différentes perspectives.

6. Appareil de traitement (105) selon l'une des revendications précédentes, dans lequel le dispositif de collecte comprend une pince (305) et est aménagé pour ramasser l'objet (125) au moyen de la pince (305) sur la surface de sol (120).

7. Appareil de traitement (105) selon les revendications 4 et 6, dans lequel une élasticité est attribuée à un objet prédéterminé (125) et le dispositif de traitement (140) est aménagé pour commander la pince (305) en fonction de l'élasticité pour le ramassage de l'objet (125).

8. Système (100) comprenant un appareil de traitement (105) selon l'une des revendications précédentes et un nettoyeur de sol automatique (110).

9. Système (100) comprenant un appareil de traitement (105) selon l'une des revendications précédentes et une station de base (115), dans lequel l'appareil de traitement (105) est aménagé pour mettre à disposition des objets (125) au départ du récipient collecteur (130) à la station de base (115).

10. Procédé pour la préparation d'une surface de sol (120) dans un ménage pour un traitement automatique du sol, dans lequel le procédé comprend les étapes suivantes :
- détection (405, 410) d'un objet (125) sur la surface de sol (120) ;
- déplacement (420) d'un appareil de traitement (105) sur la surface de sol (120) vers l'objet détecté (125) ; et
- accueil (425) de l'objet (125) dans un récipient collecteur (130) transporté ; **caractérisé en ce que**
- l'objet (125) est ramassé sur la surface de sol (120) au moyen d'un flux d'air,
- l'objet (125) est séparé du flux d'air dans un récipient intermédiaire (210) et
- un dispositif de transfert (225) transfère l'objet (125) du récipient intermédiaire (210) vers le récipient collecteur (130).

11. Procédé selon la revendication 10, comprenant en outre un traitement de la surface de sol (120) débarrassée de l'objet (125) à l'aide d'un nettoyeur de sol (110).
